(19) Europäisches Patentamt
European Patent Office
Office européen des brevets

(11) **EP 3 169 713 B1**

(12) **EUROPEAN PATENT SPECIFICATION**

(45) Date of publication and mention
of the grant of the patent:
**06.06.2018 Bulletin 2018/23**

(21) Application number: **15730203.5**

(22) Date of filing: **23.06.2015**

(51) Int Cl.:
*C08F 2/00* (2006.01)   *C09D 123/06* (2006.01)
*C09D 123/08* (2006.01)   *C08L 23/06* (2006.01)
*C08L 23/08* (2006.01)   *F16L 57/02* (2006.01)
*F16L 58/10* (2006.01)   *F16L 9/12* (2006.01)
*F16L 9/147* (2006.01)   *C08F 210/16* (2006.01)

(86) International application number:
**PCT/EP2015/064036**

(87) International publication number:
**WO 2016/008682 (21.01.2016 Gazette 2016/03)**

(54) **BIMODAL POLYETHYLENE**

BIMODALES POLYETHYLEN

POLYÉTHYLÈNE BIMODAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.07.2014 EP 14177261**

(43) Date of publication of application:
**24.05.2017 Bulletin 2017/21**

(73) Proprietor: **SABIC Global Technologies B.V.
4612 PX Bergen op Zoom (NL)**

(72) Inventors:
• **GARG, Priya
NL-6160 GA Geleen (NL)**

• **JANSSEN, Eric Johannes Cornelia
NL-6160 GA Geleen (NL)**
• **BEKINK, Gerrit-Jan
NL-6160 GA Geleen (NL)**

(74) Representative: **Sabic Intellectual Property Group
Sabic Intellectual Property Department
P.O. Box 3008
6160 GA Geleen (NL)**

(56) References cited:
**WO-A1-97/03139**      **WO-A1-2006/053741**
**WO-A1-2011/000497**

**Description**

The present invention relates to bimodal polyethylene and a steel pipe coating composition comprising bimodal polyethylene.

The production processes for bimodal high density polyethylene (HDPE) are summarised at pages 16-20 of "PE 100 Pipe systems" (edited by Bromstrup; second edition, ISBN 3-8027-2728-2).

The production of bimodal high density polyethylene (HDPE) via a low pressure slurry process is described by Alt et al. in "Bimodal polyethylene-Interplay of catalyst and process" (Macromol.Symp. 2001, 163, 135-143). In a two-stage cascade process the reactors may be fed continuously with a mixture of monomers, hydrogen, catalyst/ co-catalyst and diluent recycled from the process. In the reactors, polymerisation of ethylene occurs as an exothermic reaction at pressures in the range between for example 0.2 MPa (bar) and 1MPa (10 bar) and at temperatures in the range between for example 75 °C and 85 °C. The heat from the polymerisation reaction is removed by means of external cooling. The characteristics of the polyethylene are determined amongst others by the catalyst system and by the concentrations of catalyst, co monomer and hydrogen.

The concept of the two stage cascade process is elucidated at pages 137-138 by Alt et al. "Bimodal polyethylene-Interplay of catalyst and process" (Macromol.Symp. 2001, 163). The reactors are set up in cascade with different conditions in each reactor including for example a high hydrogen content in the first reactor and a low hydrogen content in the second reactor. This allows for the production of HDPE with a bimodal molecular mass distribution and desired co monomer content in the polyethylene chains. For reasons of monomer efficiency, it is common practise that the polymer suspension or "slurry" obtained after the second reactor flows into a so-called post reactor. In this reactor the final polymerisation takes place, resulting in a conversion rate of more than 99% of the monomers used. The suspension then flows to a suspension receiver and the suspension leaving the receiver is separated, for example via a decanter centrifuge. The resulting wet polymer is fed to a fluidised bed dryer and the liquid part goes back to the reactors. After drying the extrusion step takes place. The solvent coming from the drying of the polymer is recycled after purification by amongst other distillation. A so-called wax-rich solvent flow, resulting from a pre-distillation during the solvent recycling process, is concentrated to polyethylene wax. In general, the formation of by-products such as waxes is considered to be a complicating factor in the production of bimodal HDPE as the handling and removal of these waxes require special attention and investments, obviously translating into an economical penalty.

EP1539836 discloses that wax may be formed in the preparation of a monomodal, a bimodal or a multimodal polyethylene production process with Ziegler catalysts via a cascaded or batch suspension process.

Steel pipe coatings comprising polyethylene are disclosed in "Latest Developments in Three Component Polyethylene Coating Systems for Gas Transmission Pipelines" by Didier Nohazic et al. (CORROSION 2000, March 26 - 31, 2000 Orlando).Three component polyethylene systems comprising epoxy, adhesive and polyethylene compound are known for steel pipe protection. High Density Polyethylene (HDPE) system is the reference for the most demanding domestic and international projects. HDPE has superior properties and combined with for example an adhesive and an epoxy primer, this three- component system shows outstanding performance concerning impact resistance (high and low temperature), indentation resistance, ESCR (environmental stress crack resistance) and RCP (rapid crack propagation), stress cracking resistance and UV resistance. The top layer compound based on homopolymer A and copolymer B may be produced with bimodal technology. In addition to the excellent physical properties, it also allows high speed production due to its high melt strength and extrudability. There is an ongoing need to improve the properties of the high density polyethylene.

It is the object of the present invention to provide a HDPE grade having the required behavior under mechanical load such as stress strain behavior and resistance to slow crack growth and furthermore the required service life and chemical resistance.

It is another object of the present invention that the process results in as less as possible wax formation.

The polyethylene applied as top layer composition is polyethylene having a bimodal molar mass distribution, having a density in the range from 940 to 948 kg/m$^3$, having an MFI $_{190/5}$ in the range from 1.0 to 3.5 g/10min and comprising from 45 to 47 % by weight of ethylene-1-butene copolymer A and from 53 to 55 % by weight of ethylene-1-butene copolymer B, where all percentages are based on the total weight of the composition wherein ethylene-1-butene copolymer A has a viscosity number in the range between 70 and 110 cm$^3$/g and a density between 960 and 973 kg/m$^3$.

In the present patent application, the range "between" or "from" for example 70 and 110 cm$^3$/g means the range $\geq 70$ and $\leq 110$ cm$^3$/g.

The viscosity number and the density of ethylene-1-butene copolymer B is the result of reaching the value for MFI $_{190/5}$ and density of the bimodal polyethylene end product.

Ethylene-1-butene copolymer B may have a viscosity number in the range of 300 - 450 cm$^3$/g and a density between 920 and 930 kg/m$^3$.

The density of polyethylene and copolymer A is determined according to ISO 1183.

The viscosity number of polyethylene and copolymer A is determined according to ISO 1628-3.

MFI$_{190/5}$ of the resin is determined according to ASTM D1238 using a temperature of 190°C under a load 5kg.

It is the advantage of the present invention that the polyethylene top layer composition is based on copolymer A and copolymer B resulting in a polyethylene with a low amount of wax.

It is another advantage of the present invention that product requirements such as ESCR, impact and processability are obtained.

The polyethylene according to the invention can be used in a three component coating system comprising epoxy, adhesive and polyethylene compound. This composition results in an improved steel pipe protection. The materials applied for steel pipe coating must fulfill ISO/DIS 21809-1 Class B material.

According to a preferred embodiment of the invention the polyethylene applied as top layer composition has a density in the range from 943 to 947 kg/m$^3$ and has a MFI $_{190/5}$ in the range from 2.0 to 2.5 g/10min.

According to a preferred embodiment of the invention ethylene-1-butene copolymer A has a viscosity number in the range between $\geq 75$ and $\leq 100$ cm$^3$/g.

According to a preferred embodiment of the invention the density of copolymer A ranges between 963 and 967 kg/m$^3$.

According to a preferred embodiment of the invention the viscosity number of copolymer A ranges between 90 and 100 cm$^3$/g.

According to a preferred embodiment of the invention the high density polyethylene is produced with a multi-step slurry polymerisation process using cascaded reactors in the presence of a Ziegler Natta catalyst system.

According to a preferred embodiment of the invention the high density polyethylene is produced with a multi-step slurry polymerisation process using cascaded reactors in the presence of a catalyst system comprising

(I) the solid reaction product obtained by reaction:

a) a hydrocarbon solution containing

1) an organic oxygen containing magnesium compound or a halogen containing magnesium compound and
2) an organic oxygen containing titanium compound and

b) an aluminium halogenide having the formula AlR$_n$X$_{3-n}$ in which R is a hydrocarbon moiety containing 1 - 10 carbon atoms , X is halogen and 0 < n < 3 and

(II) an aluminium compound having the formula AlR$_3$ in which R is a hydrocarbon moiety containing 1 - 10 carbon atom .

The process for preparing the catalyst system may comprise the reaction of

I. the solid reaction product obtained by reaction:

a) a hydrocarbon solution containing

1. an organic oxygen containing magnesium compound or a halogen containing magnesium compound and
2. an organic oxygen containing titanium compound and

b) an aluminium halogenide having the formula AlR$_n$ X$_{3-n}$ in which R is a hydrocarbon moiety containing 1 - 10 carbon atoms , X is halogen and 0 < n < 3 and

combining the reaction product from (I) with
II. an aluminium compound having the formula AlR$_3$ in which R is a hydrocarbon moiety containing 1 - 10 carbon atom

During the reaction of the hydrocarbon solution comprising the organic oxygen containing magnesium compound and the organic oxygen containing titanium compound with component (I b) a solid catalyst precursor precipitates and after the precipitation reaction the resulting mixture is heated to finish the reaction.

The aluminium compound (II) is dosed prior to or during the polymerization and may be referred to as a cocatalyst.

Suitable organic oxygen containing magnesium compounds include for example magnesium alkoxides such as magnesium methylate, magnesium ethylate and magnesium isopropylate and alkylalkoxides such as magnesium ethylethylate and so called carbonized magnesiumalkoxide such as magnesium ethyl carbonate.

Preferably, the organic oxygen containing magnesium compound is a magnesium alkoxide.

Preferably the magnesium alkoxide is magnesium ethoxide Mg(OC$_2$H$_5$)$_2$.

Suitable halogen containing magnesium compounds include for example magnesium dihalides and magnesium dihalide complexes wherein the halide is preferably chlorine.

Preferably the hydrocarbon solution comprises an organic oxygen containing magnesium compound as (I) (a) (1).

Suitable organic oxygen containing titanium compound may be represented by the general formula $[TiO_x (OR)_{4-2x}]_n$ in which R represents an organic moiety, x ranges between 0 and 1 and n ranges between 1 and 6.

Suitable examples of organic oxygen containing titanium compounds include alkoxides, phenoxides, oxyalkoxides, condensed alkoxides, carboxylates and enolates. Preferably the organic oxygen containing titanium compounds is a titanium alkoxide.

Suitable alkoxides include for example $Ti(OC_2H_5)_4$, $Ti(OC_3H_7)_4$, $TiOC_4H_9)_4$ and $Ti(OC_8H_{17})_4$. Preferably the organic oxygen containing titanium compound is $Ti(OC_4H_9)_4$.

Preferably the aluminium halogenide is a compound having the formula $AIR_n X_{3-n}$ in which R is a hydrocarbon moiety containing 1 - 10 carbon atoms , X is halogen and 0.5 < n < 2.

Suitable examples of the aluminium halogenide in (I) b having the formula $AIR_nX_{3-n}$ include ethyl aluminium dibromide, ethyl aluminium dichloride, propyl aluminium dichloride, n- butyl aluminium dichloride, iso butyl aluminium dichloride, diethyl aluminium chloride, diisobutyl aluminium chloride,. Preferably X is Cl.

Preferably the organo aluminium halogenide in (I) b) is an organo aluminium chloride, more preferably the organo aluminium halogenide in (I) b) is chosen from ethyl aluminium dichloride, diethyl aluminium dichloride, isobutyl aluminium dichloride, diisobutyl aluminium chloride or mixtures thereof.

Generally the molar ratio of Al from I b): Ti from I a) 2 ranges between 3:1 and 16:1. According to a preferred embodiment of the invention the molar ratio of Al from I b): Ti from I a) 2 ranges between 6:1 and 10:1.

Suitable examples of the cocatalyst of the formula $AIR_3$ include tri ethyl aluminium, tri isobutyl aluminium, tri-n-hexyl aluminium and tri octyl aluminium. Preferably the aluminium compound in (II) of the formula $AIR_3$ is tri ethyl aluminium or tri isobutyl aluminium.

The hydrocarbon solution of organic oxygen containing magnesium compound and organic oxygen containing titanium compound can be prepared according to procedures as disclosed for example in US 4178300 and EP0876318. The solutions are in general clear liquids. In case there are any solid particles, these can be removed via filtration prior to the use of the solution in the catalyst synthesis.

Generally the molar ratio of magnesium: titanium is lower than 3:1 and preferably the molar ratio magnesium: titanium ranges between 0, 2:1 and 3:1.

Generally the molar ratio of aluminium from (II): titanium from (a) ranges between 1:1 and 300:1 and preferably the molar ratio of aluminium from (II): titanium from (a) ranges between 3:1 and 100:1.

The catalyst may be obtained by a first reaction between a magnesium alkoxide and a titanium alkoxide, followed by dilution with a hydrocarbon solvent, resulting in a soluble complex consisting of a magnesium alkoxide and a titanium alkoxide and thereafter a reaction between a hydrocarbon solution of said complex and the organo aluminium halogenide having the formula $AIR_nX_{3-n}$

Optionally an electron donor can be added either during the preparation of the solid catalytic complex (at the same time as the subsequent step or in an additional step) or at the polymerization stage.

Generally, the aluminium halogenide having the formula $AIR_nX_{3-n}$ is used as a solution in a hydrocarbon. Any hydrocarbon that does not react with the organo aluminium halogenide is suitable to be applied as the hydrocarbon.

The sequence of the addition can be either adding the hydrocarbon solution containing the organic oxygen containing magnesium compound and organic oxygen containing titanium compound to the compound having the formula $AIR_nX_{3-n}$ or the reversed.

The temperature for this reaction can be any temperature below the boiling point of the used hydrocarbon. Generally the duration of the addition is preferably shorter than 1 hour.

In the reaction of the hydrocarbon solution of the organic oxygen containing magnesium compound and the organic oxygen containing titanium compound with the organo aluminium halogenide of formula $AIR_nX_{3-n}$, the solid catalyst precursor precipitates. After the precipitation reaction the resulting mixture is heated for a certain period of time to finish the reaction. After the reaction the precipitate is filtered and washed with a hydrocarbon. Other means of separation of the solids from the diluents and subsequent washings can also be applied, like for example multiple decantation steps. All steps should be performed in an inert atmosphere of nitrogen or another suitable inert gas.

The polymerization can be carried out in the presence of an anti-static agent or anti fouling agent in an amount ranging between for example 1 and 500 ppm related to the total amount of reactor contents.

WO2006053741 discloses a polyethylene molding composition which has a trimodal molar mass distribution comprising of a low molecular weight ethylene homopolymer, a high molecular weight copolymer B and an ultra-high molecular weight ethylene copolymer. WO2006053741 is not directed to a bimodal composition based on two ethylene copolymers.

WO9703139 is directed to a trimodal ethylene polymer. This polymer is a blend of at least a first ethylene polymer having a first average molecular weight and a first molecular weight distribution and a second ethylene polymer having a second average molecular weight and a second molecular weight distribution, said blend having a third average molecular weight and a third molecular weight distribution. In the first step of the polymerization in one loop and one gas phase reactor a homopolymer is produced. WO9703139 is not directed to a bimodal composition based on two ethylene copolymers.

The invention will be elucidated by means of the following non-restrictive examples.

Examples

The solids content in the catalyst suspension was determined in triplo by drying 5 ml of a catalyst suspension under a stream of nitrogen, followed by evacuating for 1 hour and subsequently weighing the obtained amount of dry catalyst.

The density of the polymers is measured according to ISO1183.

The viscosity number is determined according to ISO 1628-3.

The melt-indices MFI $_{190/1.2}$, MFI $_{190/5}$ and MFI $_{190/21.6}$ are measured according to method ASTM D-1238 under a load of 1.2, 5 and 21.6 kg at 190°C.

The Flow Rate Ratio (FRR) being calculated as MFI $_{190/21.5}$ / MFI $_{190/5}$ is indicative for the rheological broadness of the material.

The split of the bimodal polymer is defined as the weight fraction of the lower molecular weight material in the overall polymer. For the semi-batch process as described in the following polymerization examples, this translates into the cumulative ethylene consumption from the first polymerization step compared to the cumulative ethylene consumption in the combined first and second step.

The elemental compositions of the catalysts were analysed using Neutron

Activation Analysis.

The alkoxide content in the final catalyst was determined by GC analysis of a water-quenched catalyst sample.

The oxidation state of the catalyst was determined via oxidative titration with ferric sulphate following procedures as published by Garof, T.; Johansson, S.; Pesonen, K.; Waldvogel, P.; Lindgren, D. European Polymer Journal 2002, 38, 121; and Weber, S.; Chiem, J.C.W.; Hu, Y. Transition Met. Organomet. Catal. Olefin Polym. 1988, p 45-53; and Fregonese, D.; Mortara, S.; Bresadola, S. J. Mol. Cat A: Chem. 2001, 172, 89.

Wax amount in the diluent is determined as follows: After the polymerization, the resulting polymer suspension is cooled down to 30°C and subsequently transported to a filter. Nitrogen pressure is applied on the filter to facilitate separation of the powder from the diluent. From the diluent, two 100mL samples are taken. These two solution samples are dried overnight at 50 °C under nitrogen atmosphere. The amount of residue s weighed and this is considered as the amount of waxes, the amount that is soluble in the hexanes at 30 °C.

Hexane extractables from PE powder have been determined in the following way: In a Büchi extraction system B-811, 5 g of PE powder (m0) is put in an extraction thimble (33 x 90 mm) made from a thick filter paper. This is placed in a holder and assembled in the extraction column. Empty weight of the round bottom flask and some boiling chips is noted (m1). 200 mL hexane is filled in the round bottom flask and fitted onto the extraction system. The extraction cycle is started under an inert atmosphere. In total, 40 cycles are performed. After the round bottom flask has cooled, it is taken out from the extraction set up. Hexane is removed under vacuum at 60°C for 30 minutes. After cooling, the weight of the round bottom flask is noted (m2). The amount of hexane soluble extractables is determined using equation 1:

$$\text{Weight-\% soluble part} = \frac{(m2-m1)}{m0} * 100 \qquad (1)$$

where:

m1 : weight of the round bottom flask with a few boiling chips (in g)
m2 : weight of the round bottom flask with a few boiling chips and hexane soluble components (in g)
m0 : dry weight of the PE powder (in g)

The tensile tests were performed according to ISO 527-2.

Brittleness temperature has been measured according to ASTM D746-07.

Bell tests have been performed according to ASTM 1693B.

Hardness Shore D measurements have been performed according to ISO 868.

Vicat softening A/50 (9.8N) measurements have been performed according to ISO 306.

Experiment I

Preparation of a hydrocarbon solution comprising the organic oxygen containing magnesium compound and the organic oxygen containing titanium compound

100 grams of granular $Mg(OC_2H_5)_2$ and 150 millilitres of $Ti(OC_4H_9)_4$ were brought in a 2 litre round bottomed flask equipped with a reflux condensor and stirrer. While gently stirring, the mixture was heated to 180°C and subsequently stirred for 1.5 hours. During this, a clear liquid was obtained. The mixture was cooled down to 120°C and subsequently diluted with 1480 ml of hexane. Upon addition of the hexane, the mixture cooled further down to 67°C. The mixture was kept at this temperature for 2 hours and subsequently cooled down to room temperature. The resulting clear solution was stored under nitrogen atmosphere and was used as obtained. Analyses on the solution showed a titanium concentration of 0.25 mol/l.

Experiment II

Preparation of the catalyst

In a 0.8 liters glass reactor, equipped with baffles, reflux condenser and stirrer, 424 ml hexanes and 160 ml of the complex from Example I were dosed. The stirrer was set at 1200 RPM. In a separate flask, 100 ml of 50% ethyl aluminum dichloride (EADC) solution was added to 55 mL of hexanes. The resulting EADC solution was dosed into the reactor in 15 minutes using a peristaltic pump. Subsequently, the mixture was refluxed for 2 hours. After cooling down to ambient temperature, the obtained red/brown suspension was transferred to a glass P4 filter and the solids were separated. The solids were washed 3 times using 500 ml of hexanes. The solids were taken up in 0.5 L of hexanes and the resulting slurry was stored under nitrogen. The solid content was 64 g ml$^{-1}$
Catalyst analysis results:
Ti 10.8 wt%; Mg 11.2 wt%; Al 5.0 wt%; Cl 65 wt%; OEt 3.2 wt% and OBu 2.6 wt%.

Comparative Example A

Preparation of bimodal PE using 2 a step batch polymerization

The polymerization was carried out in a 20 litres autoclave using 10 litres purified hexanes as a diluent. 8 mmols of tri-isobutylaluminum were added to the 10 litres purified hexanes. In the first stage of the polymerization reaction the mixture was heated to 85°C and pressurized with 1.2 bars ethylene and a hydrogen to ethylene ratio in the headspace of 4.2 v/v (volume/volume). Subsequently a slurry containing 40 mg of the catalyst obtained in Experiment I was dosed. The temperature was maintained at 85°C and the pressure was kept constant by feeding ethylene. The amount of ethylene, needed to maintain constant pressure was monitored and is considered to be a direct measure for the amount of polymer produced. The hydrogen to ethylene ratio in the headspace was measured via online-GC and hydrogen was fed to maintain this ratio constant at 4.2 v/v. The first phase of the reaction was stopped after 180 minutes. Stopping was performed by de-pressurizing and cooling down the reactor contents. The second stage of the reactor is started by adding 1-butene to the reactor subsequently raising the temperature to 80°C and pressurizing the reactor with ethylene and hydrogen. The set partial pressure of ethylene in the second phase is 3.0 bar and the ratios for hydrogen to ethylene and 1-butene to ethylene are respectively 0.075 and 0.140 v/v. The reaction was stopped when a split of 46 had been reached. This split can be calculated directly by comparing the amount of ethylene uptake during the different stages of polymerisation. Stopping was performed by de-pressurizing and cooling down the reactor. The reactor contents were passed through a filter; the polymer powder was collected and subsequently dried.
An amount of 1231 grams of bimodal HDPE powder was produced.
The PE powder was stabilised by adding 2000 ppm of calcium stearate, 2000 ppm of Irganox 1010 and 1000 ppm of Irgafos 168. The stabilised powder was extruded into pellets using a lab scale co-rotating twin screw extruder having a L/D of 25.5, throughput of 50g/min and rpm of 100. The pellets were used for the mentioned analyses.
The polymer had the following characteristics

- viscosity number first reactor product 73 cm$^3$/g
- overall density 945 kg/m$^3$
- overall MFI $_{190/5}$ 1.31 g/10min and
- FRR 17.

Example I

Polymerization bimodal HOPE using the catalyst of Experiment I

The polymerization was carried out similarly to the procedure as described in Comparative Example A with the exceptions that 30 mg of the catalyst as prepared in Experiment I was added to the reactor, and using a hydrogen to ethylene ratio of 2.5 v/v and a 1-butene to ethylene ratio of 0.01 v/v was used in the first stage. In the second stage the partial pressure of ethylene is set to 3.0 bar, a hydrogen to ethylene and 1-butene to ethylene ratio of respectively 0.112 and 0.139 were used. 1122 grams of bimodal HDPE powder was produced.

The PE powder was stabilised by adding 2000 ppm of calcium stearate, 2000 ppm of Irganox 1010 and 1000 ppm of Irgafos 168. The stabilised powder was extruded into pellets using a lab scale co-rotating twin screw extruder having a L/D of 25.5, throughput of 50g/min and rpm of 100. The pellets were sent for various analyses. The polymer had the following characteristics:

- viscosity number first reactor product 94 $cm^3$/g
- density first reactor product 964 $kg/m^3$
- overall density 945 $kg/m^3$
- overall MFI $_{190/5}$ 2.07 g/10min and
- FRR 16.

The amount of waxes in the diluent and hexane extractables in the polymer has been summarized in Table 1.

Table 1

| Example | Wax in diluent (g/kg PE) | Hexane extractables from PE powder (%) |
|---|---|---|
| A | 16 | 2.55 |
| I | 10 | 2.23 |

It has been shown that for the same overall density, broadness (from FRR) and even higher MFI, Example I (example with copolymer in first polymerization stage) results in significantly lower waxes in diluent and hexane extractables from PE powder which contributes favorably to the overall economy of a bimodal process. Comparative Example A (example with homopolymer in first polymerization stage) shows a higher wax amount compared to Example I.

The obtained polymers have been analysed on the mechanical properties such as tensile properties, brittleness temperature, Bell tests, Hardness Shore D and Vicat softening temperature A/50 (9.8N) measurements. The minimum requirements that a PE steel pipe coating material should fulfil as laid down in ISO 21809-1 have also been mentioned. The results are summarized in Table 2.

Table 2: Mechanical properties

| experiment | Yield stress MPa | Strain at break % | Brittleness temperature (°C) | Bell tests (h) | Hardness Shore D (°) | Vicat softening temperature A/50 (9.8 N) (°C) |
|---|---|---|---|---|---|---|
| Requirement ISO 21809-1 | ≥15 | ≥600 | - | ≥1000 | ≥55 | ≥110 |
| A | 21 | 1600 | <-90 | >1000 | 58 | 122 |
| I | 21 | 1700 | <-90 | >1000 | 58 | 123 |

Example I (with copolymer A) shows better mechanical properties and a lower wax amount compared to Comparative Example A (with homopolymer A).

**Claims**

1. Polyethylene having a bimodal molar mass distribution, having a density in the range from 940 to 948 $kg/m^3$, having an MFI $_{190/5}$ in the range from 1.0 to 3.5 g/10min and comprising from 45 to 47 % by weight of ethylene-1-butene copolymer A and from 53 to 55 % by weight of an ethylene-1-butene copolymer B, where all percentages are based on the total weight of the composition wherein ethylene-1-butene copolymer A has a viscosity number in the range between 70 and 110 $cm^3$/g and a density between 960 and 973 $kg/m^3$.

2. Polyethylene according to Claim 1 **characterized in that** ethylene-1-butene copolymer A has a viscosity number in the range between 90 and 100 $cm^3$/g.

3. Polyethylene according to any one of Claims 1-2 **characterized in that** ethylene-1-butene copolymer A has a density between 963 and 967 $kg/m^3$.

4. Polyethylene according to any one of Claims 1-3 having a density in the range from 943 to 947 $kg/m^3$and having an MFI $_{190/5}$ in the range from 2.0 to 2.5 g/10min.

5. A process for the preparation of polyethylene according to any one of Claims 1-4 with a two-step slurry polymerisation process in the presence of a catalyst system comprising

> (I) the solid reaction product obtained from the reaction of:

>> a) a hydrocarbon solution containing

>>> 1) an organic oxygen containing magnesium compound or a halogen containing magnesium compound and
>>> 2) an organic oxygen containing titanium compound and

>>> b) an aluminium halogenide having the formula $AlR_nX_{3-n}$ in which R is a hydrocarbon moiety containing 1 - 10 carbon atoms , X is halogen and 0 < n < 3 and

> (II) an aluminium compound having the formula $AlR_3$ in which R is a hydrocarbon moiety containing 1 - 10 carbon atom .

6. A process according to Claim 5 **characterised in that** the organic oxygen containing magnesium compound is a magnesium alkoxide, the organic oxygen containing titanium compound is a titanium alkoxide and the aluminium halogenide is an alkyl aluminium chloride.

7. A process according to any one of Claims 5-6 characterised the molar ratio of Al from I b): Ti from I a) 2 ranges between 6:1 and 10:1.

8. Steel pipe coating composition comprising polyethylene according to any one of Claims 1-4 or polyethylene obtained with the process according to any one of Claims 5-7 as top layer.

9. A pipe coated with the steel pipe coating composition according to Claim 8.

**Patentansprüche**

1. Polyethylen mit einer bimodalen Molmasseverteilung, mit einer Dichte in dem Bereich von 940 bis 948 $kg/m^3$, mit einem $MFI_{190/5}$ in dem Bereich von 1,0 bis 3,5 g/10 min und umfassend von 45 bis 47 Gew.-% Ethylen-1-buten-Copolymer A und von 53 bis 55 Gew.-% an einem Ethylen-1-buten-Copolymer B, wobei alle Prozentwerte auf das Gesamtgewicht der Zusammensetzung bezogen sind, wobei Ethylen-1-buten-Copolymer A eine Viskositätszahl in dem Bereich zwischen 70 und 110 $cm^3$/g und eine Dichte zwischen 960 und 973 $kg/m^3$ aufweist.

2. Polyethylen gemäß Anspruch 1, **dadurch gekennzeichnet, dass** Ethylen-1-buten-Copolymer A eine Viskositätszahl in dem Bereich zwischen 90 und 100 $cm^3$/g aufweist.

3. Polyethylen gemäß einem der Ansprüche 1-2, **dadurch gekennzeichnet, dass** Ethylen-1-buten-Copolymer A eine Dichte zwischen 963 und 967 $kg/m^3$aufweist.

4. Polyethylen gemäß einem der Ansprüche 1-3 mit einer Dichte in dem Bereich von 943 bis 947 $kg/m^3$ und mit einem $MFI_{190/5}$ in dem Bereich von 2,0 bis 2,5 g/10 min.

5. Verfahren zur Herstellung von Polyethylen gemäß einem der Ansprüche 1-4 mit einem zweistufigen Aufschlämmungspolymerisationsverfahren in Gegenwart eines Katalysatorsystems umfassend

(I) das feste Reaktionsprodukt, das aus der Reaktion von:

a) einer Kohlenwasserstofflösung, enthaltend

1) eine organischen Sauerstoff enthaltende Magnesiumverbindung oder eine halogenhaltige Magnesiumverbindung und
2) eine organischen Sauerstoff enthaltende Titanverbindung und

b) einem Aluminiumhalogenid mit der Formel $AlR_nX_{3-n}$, wobei R eine Kohlenwasserstoffeinheit ist, die 1-10 Kohlenstoffatome enthält, X Halogen ist und $0 < n < 3$,

erhalten ist, und
(II) eine Aluminiumverbindung mit der Formel $AlR_3$, wobei R eine Kohlenwasserstoffeinheit ist, die 1-10 Kohlenstoffatome enthält.

6. Verfahren gemäß Anspruch 5, **dadurch gekennzeichnet, dass** die organischen Sauerstoff enthaltende Magnesiumverbindung ein Magnesiumalkoxid ist, die organischen Sauerstoff enthaltende Titanverbindung ein Titanalkoxid ist und das Aluminiumhalogenid ein Alkylaluminiumchlorid ist.

7. Verfahren gemäß einem der Ansprüche 5-6, **dadurch gekennzeichnet, dass** das Molverhältnis von Al aus I b): Ti aus I a)2 in dem Bereich zwischen 6:1 und 10:1 liegt.

8. Stahlrohr-Beschichtungszusammensetzung, umfassend Polyethylen gemäß einem der Ansprüche 1-4 oder Polyethylen, das mit dem Verfahren gemäß einem der Ansprüche 5-7 erhalten ist, als Deckschicht.

9. Rohr, das mit der Stahlrohr-Beschichtungszusammensetzung gemäß Anspruch 8 beschichtet ist.


## Revendications

1. Polyéthylène ayant une distribution de masse molaire bimodale, ayant une densité de 940 à 948 kg/m$^3$, ayant un indice d'écoulement à l'état fondu $MFI_{190/5}$ de 1,0 à 3,5 g/10 min et comprenant de 45 à 47 % en poids d'un copolymère A d'éthylène-1-butène et de 53 à 55 % en poids d'un copolymère B d'éthylène-1-butène, tous les pourcentages étant exprimés relativement au poids total de la composition, dans lequel le copolymère A d'éthylène-1-butène a un indice de viscosité de 70 à 110 cm$^3$/g et une densité de 960 à 973 kg/m$^3$.

2. Polyéthylène selon la revendication 1, **caractérisé en ce que** le copolymère A d'éthylène-1-butène a un indice de viscosité de 90 à 100 cm$^3$/g.

3. Polyéthylène selon l'une quelconque des revendications 1 ou 2, **caractérisé en ce que** le copolymère A d'éthylène-1-butène a une densité de 963 à 967 k/m$^3$.

4. Polyéthylène selon l'une quelconque des revendications 1 à 3, ayant une densité de 943 à 947 kg/m$^3$ et ayant une valeur $MFI_{190/5}$ de 2,0 à 2,5 g/10 min.

5. Procédé de préparation d'un polyéthylène selon l'une quelconque des revendications 1 à 4 par mise en oeuvre d'un procédé de polymérisation en suspension en deux étapes en présence d'un système catalytique comprenant :

(I) le produit réactionnel solide obtenu par réaction de :

a) une solution d'hydrocarbures contenant :

1) un composé de magnésium organique contenant de l'oxygène ou un composé de magnésium contenant un halogène, et
2) un composé de titane organique contenant de l'oxygène, et

b) un halogénure d'aluminium ayant la formule $AlR_nX_{3-n}$, dans laquelle R est une fraction hydrocarbonée contenant 1 à 10 atomes de carbone, X est un atome d'halogène et $0 < n < 3$, et

(II) un composé d'aluminium ayant la formule $AlR_3$, dans laquelle R est une fraction hydrocarbonée contenant 1 à 10 atomes de carbone.

6. Procédé selon la revendication 5, **caractérisé en ce que** le composé de magnésium organique contenant de l'oxygène est un alcoxyde de magnésium, le composé de titane organique contenant de l'oxygène est un alcoxyde de titane et l'halogénure d'aluminium est un chlorure d'alkylaluminium.

7. Procédé selon l'une quelconque des revendications 5 à 6, **caractérisé en ce que** le rapport molaire de l'aluminium de I b) contre le titane de I a) 2 est de 6:1 à 10:1.

8. Composition de revêtement pour tuyaux en acier comprenant un polyéthylène selon l'une quelconque des revendications 1 à 4 ou un polyéthylène obtenu par mise en oeuvre du procédé selon l'une quelconque des revendications 5 à 7, utilisée comme couche supérieure.

9. Tuyau revêtu de la composition de revêtement pour tuyaux en acier selon la revendication 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1539836 A
- US 4178300 A
- EP 0876318 A
- WO 2006053741 A
- WO 9703139 A

### Non-patent literature cited in the description

- **ALT et al.** Bimodal polyethylene-Interplay of catalyst and process. *Macromol.Symp.,* 2001, vol. 163, 135-143
- **ALT et al.** Bimodal polyethylene-Interplay of catalyst and process. *Macromol.Symp.,* 2001, vol. 163, 137-138
- **DIDIER NOHAZIC et al.** Latest Developments in Three Component Polyethylene Coating Systems for Gas Transmission Pipelines. *CORROSION,* 26 March 2000
- **GAROF, T. ; JOHANSSON, S. ; PESONEN, K. ; WALDVOGEL, P. ; LINDGREN, D.** *European Polymer Journal,* 2002, vol. 38, 121
- **WEBER, S. ; CHIEM, J.C.W. ; HU, Y.** *Transition Met. Organomet. Catal. Olefin Polym.,* 1988, 45-53
- **FREGONESE, D. ; MORTARA, S. ; BRESADOLA, S.** *J. Mol. Cat A: Chem.,* 2001, vol. 172, 89